# EUROPÄISCHE PATENTANMELDUNG

(11) **EP 1 258 516 A2**
(43) Veröffentlichungstag der Anmeldung: **20.11.2002**
(21) Anmeldenummer: 02009523.8
(22) Anmeldetag: 26.04.2002
(51) Int. Cl.: C09J 7/02

(54) **Klebfolienstreifen**

(30) Priorität: 17.05.2001 DE 10123982
(71) Anmelder: Tesa AG, 20253 Hamburg (DE)
(72) Erfinder: Zimmermann, Dieter, 21635 Jork (DE); Schulze, Walter, 25421 Pinneberg (DE)

(57) **Zusammenfassung**

Beidseitig klebender Klebfolienstreifen für reversible Verklebungen, mit
a) einer schwach klebenden Selbstklebemasse für reversible Verklebungen auf der einen Seite, die beschichtet ist auf
b) eine Klebfolie auf Basis von thermoplastischem Kautschuk und klebrigmachenden Harzen ist, wobei die Klebefolie hohe Elastizität und geringe Plastizität aufweist und wobei die Adhäsion geringer als die Kohäsion ist, das Haftvermögen beim Dehnen der Folie weitgehend verschwindet und das Verhältnis von Abzugskraft zu Reißlast mindestens 1 : 1,5 ist, wobei die Masse selbstklebend eingestellt ist, derart, dass die zweite/andere Seite des Klebfolienstreifens für feste Verklebungen geeignet ist, jedoch durch Ziehen an dem Klebfolienstreifen in Richtung der Verklebungsebene wieder gelöst werden kann.

## Beschreibung

Die Erfindung betrifft einen Klebfolienstreifen für reversible Verklebungen, nämlich einen solchen, der beidseitig selbstklebend ist, sowie seine Verwendung.

Beidseitig klebende Klebfolienstreifen, sogenannte Fixe sind bekannt und handelsüblich, etwa als Fotofix in der Form, daß solche Produkte irreversibel in Fotoalben einzukleben sind, auf ihnen Fotos etc. aber durchaus reversibel und also austauschbar verklebt werden können. Das Album etc. selbst aber ist nicht mehr von diesen Produkten zu befreien.

Zum reversiblen Verkleben gibt es jedoch Klebfolienstreifen, die sich durch Ziehen in Richtung der Verklebungsebene aus einer Klebfuge herauslösen lassen. Elastisch oder plastisch hochdehnbare Selbstklebebänder, welche sich durch Verstrecken im wesentlichen in der Verklebungsebene (durch sogenanntes Strippen) auch von zum Teil sehr empfindlichen Verklebungsuntergründen, wie z.B. Papieren oder gestrichener Rauhfasertapete, rückstands- und zerstörungsfrei wiederablösen lassen, sind in **US 4,024,312, DE 33 31 016, WO 92/11332, WO 92/11333, DE 42 22 849, WO 95/06691, DE 195 31 696, DE 196 26 870, DE 196 49 727, DE 196 49 728, DE 196 49 729, DE 197 08 366** beschrieben. Eingesetzt werden sie häufig in Form von Klebebandstreifen, welche einen bevorzugt nicht haftklebrigen Anfasserbereich aufweisen, von welchem aus der Ablöseprozess eingeleitet wird. Besondere Applikationen und Ausführungsformen entsprechender Selbstklebebänder finden sich u.a. in DE 42 33 872, WO 94/ 21157, DE 44 28 587, DE 44 31 914, WO 97/07172, DE 196 49 636 und WO 98/03601.

Beschrieben wurden im Stand der Technik auch bereits derartige Produkte mit verschiedenartig ausgerüsteten klebenden Seiten, so in US 5,516,581 (Sp. 2, Z. 37-43), wo darauf hingewiesen wird, dass die beiden Klebstreifen auch verschiedene Klebmassen aufweisen können. Weitere Hinweise für reversible Fotoverklebungen und dergleichen finden sich dort jedoch nicht.

Aufgabe der Erfindung war es hier Abhilfe zu schaffen, insbesondere ein Fotobefestigungssystem zur Verfügung zu stellen, dass das reversible Entfernen der Fotos ermöglicht und gleichzeitig ein rückstands- und zerstörungsfreies Lösen aus dem Fotoalbum gewährleistet. Gelöst wird diese Aufgabe durch einen Klebfolienstreifen, wie er näher in den Ansprüchen gekennzeichnet ist. Um Wiederholungen zu vermeiden, wird auf die Ansprüche ausdrücklich Bezug genommen.

Auf der einen Seite weist der erfindungsgemäße Klebfolienstreifen eine Selbstklebemasse auf, die auf Basis von Acrylat / Stearat besteht und durch den Stearatanteil reversibel ist.

Auf der anderen Seite besteht die Selbstklebemasse aus einer Klebfolie, wie sie insbesondere in DE 33 31 016 beschrieben ist, ausdrücklich wird darauf verwiesen, insbesondere auf das dortige Beispiel.

Auch bezüglich der Verarbeitung und der Formen wird auf den Stand der Technik dazu Bezug genommen, insbesondere auf DE 196 41 094 zum verlustfreien Stanzen und auf DE 44 28 587 zu spitz etc. auslaufenden Verklebungsflächen.

Beispielsweise wird so vorgegangen: Der im Doppelschneckenextruder hergestellte transparente Powerstripfilm (ca. 0,3 mm auf Trennpapier) gemäß DE 33 31 016 (Beispiel) wird im Rakelverfahren auf einer Beschichtunganlage mit einer Masse bestehend aus PSA-Acrylat und Stearat, gelöst in Benzin/Aceton -15%ig- mit ca.15 g/cm² beschichtet. (Nassauftrag mit anschließender Trocknung) und abschließend mit Trennpapier eingedeckt.

Nach dem folgenden Aufschneiden zu Mutterrollen erfolgt das rotative Stanzen zu den bekannten Posterstrip-Formen.

Die Anwendung ist dann wie folgt:

Man entfernt den Fotostrip von dem Trennpapier (Darreichungsform) und befestigt ihn auf dem Fotoalbum.

Nach dem Abziehen des kleinen Trennpapierstreifens kann nun das Foto befestigt werden.

Das Foto kann später reversibel entfernt werden und der stripbare Fotostrip kann nun rückstands- und zerstörungsfrei ebenfalls entfernt werden.

## Patentansprüche

1. Beidseitig klebender Klebfolienstreifen für reversible Verklebungen, mit
a) einer schwach klebenden Selbstklebemasse für reversible Verklebungen auf der einen Seite, die beschichtet ist auf
b) eine Klebfolie auf Basis von thermoplastischem Kautschuk und klebrigmachenden Harzen ist, wobei die Klebefolie hohe Elastizität und geringe Plastizität aufweist und wobei die Adhäsion geringer als die Kohäsion ist, das Haftvermögen beim Dehnen der Folie weitgehend verschwindet und das Verhältnis von Abzugskraft zu Reißlast mindestens 1 : 1,5 ist, wobei die Masse selbstklebend eingestellt ist, derart, dass die zweite/andere Seite des Klebfolienstreifens für feste Verklebungen geeignet ist, jedoch durch Ziehen an dem Klebfolienstreifen in Richtung der Verklebungsebene wieder gelöst werden kann.

2. Klebfolienstreifen nach Anspruch 1 **dadurch gekennzeichnet, dass** die Selbstklebemasse eine Klebkraft von 18 bis 24 CN/cm hat.

3. Klebfolienstreifen nach Anspruch 1 **dadurch gekennzeichnet dass**, die Selbstklebemasse eine solche auf Basis von Acrylaten ist.

4. Klebfolienstreifen nach Anspruch 1 **dadurch gekennzeichnet dass**, ein nicht klebender Anfasser vorgesehen ist, an dem zum Entkleben in Richtung der Verklebungsebene gezogen werden kann.

5. Klebfolienstreifen nach Anspruch 4 **dadurch gekennzeichnet, dass** der Anfasser beschriftbar ist, insbesondere aus einem beschriftbaren Lack oder einer beschriftbaren Papier-Abdeckung besteht, insbesondere farbig ist.

6. Klebfolienstreifen nach Anspruch 1 **dadurch gekennzeichnet dass**, die Selbstklebemasse und die Klebfolie transparent sind.

7. Klebfolienstreifen nach Anspruch 1 **dadurch gekennzeichnet dass**, die Selbstklebemasse 10 - 40 µm, insbesondere 12 - 25 µm dick ist und die Klebfolie 100-8000 µm, insbesondere 200 - 400 µm dick ist.

8. Klebfolienstreifen nach Anspruch 1 **dadurch gekennzeichnet dass**, seine Verklebungsfläche zu dem Ende hin abnimmt, das demjenigen gegenüberliegt, an welchem durch Ziehen die Klebbindung wieder gelöst wird.

9. Verwendung eines Klebstreifens nach einem der Ansprüche 1 - 7 zum reversiblen Verkleben eines Fotos und dergleichen.
